# EUROPÄISCHE PATENTSCHRIFT

(11) **EP 1 630 576 B1**
(45) Veröffentlichungstag und Bekanntmachung des Hinweises auf die Patenterteilung: **02.10.2019**
(21) Anmeldenummer: 05017331.9
(22) Anmeldetag: 09.08.2005
(51) Int. Cl.: G02B 6/00, F21S 41/143, F21S 41/147, F21S 41/24, F21S 43/14, F21V 8/00, F21Y 115/10

(54) **Leuchtmittel mit vorgegebener Abstrahlcharakteristik und Primäroptikelement für ein Leuchtmittel**
Lighting device with a predetermined output beam characteristic and primary optical component for a lighting device
Projecteur avec un faisceau lumineux prédéfini et élément optique primaire pour un projecteur

(30) Priorität: 15.04.2005 DE 102005017528; 27.08.2004 DE 102004041872; 31.03.2005 DE 102005015149
(43) Veröffentlichungstag der Anmeldung: 01.03.2006
(73) Patentinhaber: OSRAM Opto Semiconductors GmbH, 93055 Regensburg (DE)
(72) Erfinder: Wanninger, Mario, 93055 Harting (DE); Wilm, Alexander, 93051 Regensburg (DE)
(74) Vertreter: Epping - Hermann - Fischer

(56) Entgegenhaltungen:
- WO-A1-03/021330
- DE-A1- 10 302 969
- US-A- 5 290 169
- US-A- 5 727 108
- US-A1- 2003 085 642
- US-A1- 2004 264 185
- US-A1- 2005 117 366
- US-B1- 6 192 176

## Beschreibung

Die vorliegende Erfindung bezieht sich auf ein Leuchtmittel mit vorgegebener Abstrahlcharakteristik sowie auf ein Primäroptikelement für ein derartiges Leuchtmittel.

Derartige Leuchtmittel werden beispielsweise in Kraftfahrzeugen für Scheinwerfer eingesetzt. Für die Abstrahlcharakteristik von Kraftfahrzeugscheinwerfern sind in vielen Ländern gesetzliche Spezifikationen vorgesehen, die unter anderem sowohl eine ausreichende Beleuchtung des Verkehrsraums für den Kraftfahrzeugführer als auch die Vermeidung einer Blendung des Gegenverkehrs sicherstellen sollen. In der Regel sind hierbei scharfe Hell-Dunkel-Übergänge für die Abstrahlcharakteristik vorgeschrieben.

Bei herkömmlichen Scheinwerfern ist als Lichtquelle eine Glüh- oder Entladungslampe vorgesehen. Die vorgegebene Abstrahlcharakteristik wird hierbei mittels sogenannter "Shutter" in Form von Blenden oder Klingen, die im Strahlengang angeordnet sind, und gegebenenfalls einer Optik wie zum Beispiel einem Reflektor mit nachgeordneter Linse realisiert. Diese Shutter werden insbesondere zum Erzielen scharfer Hell-Dunkel-Übergänge eingesetzt.

Allerdings absorbieren derartige Shutter das auf sie treffende Licht oder lenken es in eine unerwünschte Richtung ab, so dass es nicht mehr als Nutzlicht zur Verfügung steht. Dadurch wird die Effizienz eines entsprechenden Scheinwerfers gemindert.

Es ist Aufgabe der vorliegenden Erfindung, ein Leuchtmittel der eingangs genannten Art zu schaffen, das eine verbesserte Effizienz aufweist. Zudem soll ein vorteilhaftes Primäroptikelement für ein derartiges Leuchtmittel angegeben werden.

Diese Aufgabe wird mit einem Leuchtmittel mit den Merkmalen des Patentanspruchs 1 bzw. mit einem Primäroptikelement gemäß Anspruch 12 gelöst. Vorteilhafte Weiterbildungen sind Gegenstand der abhängigen Ansprüche.

Ein erfindungsgemäßes Leuchtmittel mit vorgegebener Abstrahlcharakteristik umfasst eine Lichtquelle, der in einer Abstrahlrichtung eine optische Vorrichtung nachgeordnet ist, wobei zwischen der Lichtquelle und der optischen Vorrichtung ein Primäroptikelement mit einem Lichteingang und einem Lichtausgang angeordnet ist. Das Ausbilden einer der vorgegebenen Abstrahlcharakteristik entsprechenden Abstrahlcharakteristik umfasst eine Projektion einer Fläche des Lichtausgangs oder einer imaginären Fläche, die sich im Strahlengang befindet, mittels der optischen Vorrichtung. Die imaginäre Fläche kann dem Lichtausgang in einer Abstrahlrichtung nachgeordnet sein oder sich vollständig oder teilweise innerhalb des Primäroptikelements befinden. Sie kann eben, uneben und/oder gekrümmt ausgebildet sein.

Mit Vorteil wird bei einer Ausführungsform des Leuchtmittels die vorgegebene Abstrahlcharakteristik durch eine entsprechende Formgebung des Querschnitts des Lichtausgangs des Primäroptikelements in Verbindung mit der Projektion der Lichtaustrittsfläche oder der imaginären Fläche erzielt. Bevorzugt umfasst das Ausbilden einer gewünschten Abstrahlcharakteristik gezielte Reflexionen im Primäroptikelement, d.h. das Primäroptikelement ist derart ausgebildet, das gewünschte Eigenschaften des Lichtkegels innerhalb des Primäroptikelements durch gezielte Reflexionen an speziell geformten und/oder speziell verlaufenden reflektierenden Flächen des Primäroptikelements ausgebildet werden, so dass eine Abstrahlcharakteristik, die der vorgesehenen Abstrahlcharakteristik des Leuchtmittels entspricht, im wesentlichen durch eine Projektion einer realen oder imaginären Fläche, auf die der Lichtkegel trifft, mittels einer optischen Vorrichtung erzeugt werden kann.

Das Leuchtmittel ist besonders bevorzugt ein Scheinwerferleuchtmittel, insbesondere für Transportvorrichtungen wie Kraftfahrzeuge, Züge, Flugzeuge oder ähnliches.

Die Lichtquelle umfasst gemäß einer weiteren Ausführungsform mindestens eine Lichtemissionsdiode (LED) auf. Bevorzugt weist sie eine Mehrzahl von Lichtemissionsdioden auf. Die Mehrzahl von Leuchtdioden sind mit Vorteil in einer linienförmigen Anordnung angeordnet. Durch die Zuordnung einer Mehrzahl von Lichtemissionsdioden zu einem einzigen Primäroptikelement kann ein Leuchtmittel von besonders hoher Lichtintensität mit kompakten Abmessungen realisiert werden. Zudem ist eine gezielte Anpassung des Primäroptikelements an eine Mehrzahl von Lumineszenzdioden vorteilhaft für das effiziente realisieren einer gewünschten Abstrahlcharakteristik.

Die Lichtemissionsdiode weist zweckmäßigerweise einen strahlungsemittierenden Halbleiterkörper und ein Lumineszenzkonversionselement auf, wobei das Lumineszenzkonversionselement zumindest teilweise Strahlung, die vom Halbleiterkörper erzeugt wird, in Strahlung anderer Wellenlänge umwandelt. Dadurch lässt sich insbesondere weißes Licht erzeugen. Hierzu werden die von dem Halbleiterkörper erzeugte Strahlung und die von dem Lumineszenzkonversionselement erzeugte Strahlung in dem Primäroptikelement mit Vorteil gemischt.

Das Lumineszenzkonversionselement ist zweckmäßigerweise auf den Halbleiterkörper, bevorzugt schichtförmig, aufgebracht.

Gemäß einer besonders bevorzugten Ausführungsform des Leuchtmittels weist der Lichteingang eine Lichteingangsfläche oder eine Lichteingangsöffnung auf, die eine Breite von kleiner als oder gleich 1,5 mal, bevorzugt von kleiner als oder gleich 1,25 mal einer lateralen Ausdehnung der Lumineszenzdiode bzw. Lumineszenzdioden aufweist, wobei die laterale Ausdehnung der Lumineszenzdiode bzw. Lumineszenzdioden entlang der Breite der Lichteingangsfläche bzw. Lichteingangsöffnung gemessen wird.

Ein derart kleiner Lichteingang ist vorteilhaft, um den Raumwinkel, in den die elektromagnetische Strahlung emittiert wird, mit dem optischen Element möglichst nah am Halbleiterchip zu verkleinern, wo eine Querschnittsfläche des Primäroptikelements und somit auch des Strahlenkegels klein ist. Dies ist insbesondere dann vorteilhaft, wenn das Leuchtmittel geeignet sein soll, eine möglichst hohe Strahlungsstärke auf eine möglichst kleine Fläche zu projizieren. Eine wichtige Erhaltungsgröße in der geometrischen Optik ist dabei das Etendue, d.h. die Strahldichte. Sie ist das Produkt aus dem Flächeninhalt einer Lichtquelle und dem Raumwinkel, in den sie abstrahlt. Die Erhaltung des Etendue hat unter anderem zur Konsequenz, dass man das Licht einer diffusen Strahlungsquelle, zum Beispiel einer Halbleiterleuchtdiode, nicht mehr konzentrieren, d.h. nicht mehr auf eine Fläche mit kleinerer Ausdehnung umlenken kann, weshalb es vorteilhaft ist, wenn das Lichtbündel mit einem möglichst kleinen Querschnitt in das optische Element eintritt.

Damit bei einem kleinen Lichteingang die gesamte von einem Halbleiterchip emittierte Strahlung in das optische Element gelangen kann, ist es entsprechend erforderlich, dass der Lichteingang und der Lumineszenzdiodenchip einen möglichst geringen Abstand zueinander aufweisen. Der Abstand beträgt mit Vorteil weniger als 50 µm, bevorzugt weniger als 30 µm, besonders bevorzugt weniger als 10 µm. Alternativ grenzt der mindestens eine Lumineszenzdiodenchip unmittelbar an den Lichteingang an. Falls der Lumineszenzdiodenchip mit einem Lumineszenzkonversionsmaterial versehen ist, grenzt dieses entsprechend an den Lichteingang an.

Das Primäroptikelement verringert die Divergenz eines eingestrahlten Lichtkegels bevorzugt derart, dass der Lichtkegel nach Austritt aus dem Lichtausgang einen Öffnungswinkel zwischen 0 und 45°, bevorzugt zwischen 0 und 30° aufweist, wobei die Grenzen jeweils einbezogen sind.

Die Lichtquelle emittiert bevorzugt weißes Licht.

Ein Primäroptikelement, das für das Leuchtmittel geeignet ist, ist in der Art eines nichtabbildenden Konzentrators ausgebildet. Dieser ist, verglichen mit einer üblichen Verwendung eines Konzentrators, für eine Durchstrahlung in umgekehrter Richtung vorgesehen. Ein derartiger Konzentrator weist zweckmäßigerweise einen Lichteingang auf, der eine kleinere Querschnittsfläche aufweist als der Lichtausgang. Das Primäroptikelement umfasst mit Vorteil reflektierende Seitenwände, die sich vom Lichteingang zum Lichtausgang erstrecken und die geeignet sind, Licht gezielt zu reflektieren, so dass ein Lichtkegel mit gewünschten Eigenschaften geformt werden kann. Die Eigenschaften des Lichtkegels sind insbesondere eine geringe Divergenz, eine bestimmte Querschnittsform, abrupte hell/dunkel Übergänge, und/oder eine im Querschnitt inhomogene Leuchtdichteverteilung oder Beleuchtungsstärkeverteilung. Zusätzlich wird das Licht im Verlauf vom Lichteingang zum Lichtausgang mit Vorteil durchmischt, so dass das Primäroptikelement nichtabbildend ist. Das Licht wird bevorzugt derart durchmischt, dass eine auf Seite des Lichteingangs vorhandene Strahlungscharakteristik eines einfallenden Lichtkegels auf Seite des Lichtausganges aufgrund der Durchmischung verloren geht oder signifikant zum Erzielen einer vorgesehenen Abstrahlcharakteristik abgeändert wird.

Erfindungsgemäß weist ein Lichtausgang des Primäroptikelements, gesehen in einer Draufsicht, eine Kontur mit einer langen Form auf, die eine erste Längsseite und eine der ersten Längsseite gegenüberliegende zweite Längsseite aufweist.

Die erste Längsseite weist einen geringeren Abstand zum Lichteingang auf als die zweite Längsseite. Dadurch lassen sich insbesondere inhomogene Leuchtdichteverteilungen effizient auf dem Lichtausgang abbilden.

In einer zweckmäßigen Ausführungsform weist das Primäroptikelement einen Grundkörper auf, der einen Hohlraum definiert und dessen Innenwand zumindest für einen spektralen Teilbereich von sichtbarer elektromagnetischer Strahlung reflektierend ist. Ein derartiges Primäroptikelement lässt sich gut mit einer Lichtquelle kombinieren, die beispielsweise innerhalb des Hohlraums angeordnet werden und/oder in dem Grundkörper integriert werden kann.

Alternativ ist das Primäroptikelement in der Art eines dielektrischen Konzentrators ausgebildet, dessen Grundkörper ein aus einem dielektrischen Material mit geeignetem Brechungsindex bestehender Vollkörper ist, so dass über den Lichteingang eingekoppeltes Licht durch Totalreflexion an seitlichen Grenzflächen des Vollkörpers zum umgebenden Medium, die den Lichteingang mit dem Lichtausgang verbinden, reflektiert wird. Mittels dieser Ausführungsform kann aufgrund der hohen Effizienz interner Totalreflexion eine besonders hohe Effizienz erzielt werden.

Bevorzugt ist das Primäroptikelement derart ausgebildet, dass es durch den Lichteingang eingestrahltes Licht durch interne Reflexionen kollimiert, d.h. eine Divergenz des eingestrahlten Lichtes verringert. Insbesondere die Verwendung eines Primäroptikelements, das in der Art eines Konzentrators ausgebildet ist und das für eine Durchstrahlung in, verglichen mit der üblichen Verwendung eines Konzentrators, umgekehrter Richtung vorgesehen ist, ist hierfür vorteilhaft.

Besonders bevorzugt ist das Primäroptikelement derart ausgebildet, dass es durch den Lichteingang eingestrahltes Licht mit einer inhomogenen Lichtdichteverteilung, die im wesentlichen einer vorgesehenen Lichtdichteverteilung entspricht, auf dem Lichtausgang oder einer imaginären Fläche abbildet. Die imaginäre Fläche ist in einem Strahlengang angeordnet, der durch die Strahlführung in dem Primäroptikelement vorgegeben ist. Bevorzugt ist die imaginäre Fläche dem Lichtausgang in einer Abstrahlrichtung des Primäroptikelements nachgeordnet.

Inhomogene Lichtdichteverteilungen oder Beleuchtungsstärkeverteilungen werden bei einer Vielzahl von Anwendungen, insbesondere auch für Scheinwerfer von Kraftfahrzeugen benötigt. Sie lassen sich Vorteilhafterweise mittels eines einzigen Primäroptikelements erzielen, was kompakte Bauformen von Leuchtmitteln ermöglicht. Alternativ können auch mehrere Primäroptikelemente in einem Leuchtmittel oder mehrere Leuchtmittel miteinander zur Erzielung einer gewünschten Lichtdichteverteilung oder Beleuchtungsstärkeverteilung kombiniert werden.

Zweckmäßigerweise ist das Primäroptikelement derart ausgebildet, dass es durch den Lichteingang eingestrahltes Licht durch interne Reflexionen mischt. Dadurch kann erreicht werden, dass eine auf dem Lichtausgang abgebildete Lichtcharakteristik im Wesentlichen unabhängig von einer in den Lichteingang eingestrahlten Lichtcharakteristik ist.

In einer weiteren vorteilhaften Ausführungsform umfasst das Primäroptikelement auf der Seite des Lichtausgangs einen Querschnitt in der Art eines Vieleckes, das mindestens eine verrundete Ecke aufweist. Mit anderen Worten weist der Querschnitt im wesentlichen die Form eines Vieleckes auf, bevorzugt die Form eines Rechteckes oder Fünfeckes, wobei jedoch mindestens eine oder alle Ecken dieses Vieleckes nicht eckig, sondern verrundet sind. Dadurch lässt sich ein hell/dunkel Übergang in seinem Verlauf etwas abschwächen und somit einstellen.

Andererseits lässt sich mit einem Primäroptikelement, dass zumindest in einem Abschnitt auf Seite des Lichtausganges einen eckigen Querschnitt aufweist, eine homogenere Durchmischung des Lichtes erzielen, so dass die Ecken alternativ auch nicht verrundet sein können.

Ein Primäroptikelement mit verrundeten Ecken lässt sich leichter herstellen, beispielsweise mittels eines Spritzverfahrens wie Spritzpressen oder Spritzgießen, da Ecken bei derartigen Herstellungsverfahren schwieriger zu füllen sind.

Zusätzlich oder alternativ umfasst das Primäroptikelement zumindest in einem Abschnitt auf Seite des Lichteinganges eine Mehrzahl nebeneinander angeordneter und sich in Richtung Lichtausgang erstreckender Lichtkanäle, die seitlich ineinander übergehen. Die Lichtkanäle weisen jeweils einen runden Querschnitt auf. Mittels den Lichtkanälen kann dem Licht, das durch den Lichteingang eingestrahlt wird, eine Vorzugsrichtung innerhalb des Primäroptikelements gegeben werden, was für die Erzeugung spezifischer inhomogener Lichtdichteverteilungen von Vorteil ist.

Die Lichtkanäle laufen im Verlauf zum Lichtausgang derart zusammen, dass mindestens ein Lichtkanal vollständig in den übrigen Lichtkanälen aufgeht. Dadurch kann Licht verschiedener Lichtkanäle auf einen gemeinsamen Bereich gelenkt, insbesondere fokussiert werden.

Das Primäroptikelement weist in der Nähe des Lichtausgangs besonders bevorzugt eine Querschnittsform in der Art einer vorgegebenen Querschnittsform für einen zu emittierenden Lichtkegel auf. Dadurch können insbesondere scharfe hell/dunkel Übergänge ohne eine Verwendung von Blenden erzielt und eine Effizienz von Leuchtmitteln mit derartigen Primäroptikelementen entsprechend gesteigert werden. Die Querschnittsform ist gemäß einer weiteren vorteilhaften Ausführungsform unsymmetrisch.

Mit besonderem Vorteil weist die erste Längsseite des Lichtausgangs zwei Teilabschnitte auf, deren Haupterstreckungsrichtungen derart zueinander geneigt sind, dass sie auf einer Außenseite des Lichtausgangs einen Winkel von kleiner als oder gleich 170° und größer als oder gleich 160° einschließen. Bevorzugt weist auch ein Abschnitt des Primäroptikelements in der Nähe des Lichtausganges eine derartig ausgebildete Längsseite auf. Dadurch lässt sich ein Lichtkegel mit einer Form erzeugen, die insbesondere für ein Abblendlicht von Kraftfahrzeugen von Vorteil ist.

Das Primäroptikelement ist mit Vorteil in der Art eines Compound Parabolic Concentrators (CPC), eines Compound Elliptic Concentrators (CEC) oder eines Compound Hyperbolic Concentrators (CHC) ausgebildet. Mit besonderem Vorteil sind die reflektierenden Flächen des Primäroptikelementes als Freiformflächen ausgebildet, um eine gewünschte Abstrahlcharakteristik optimal einzustellen, wobei das Primäroptikelement in seiner Grundform bevorzugt einem CPC, einem CEC oder einem CHC ähnelt.

Zweckmäßigerweise weist das Primäroptikelement reflektierende Flächen auf, die konvex gekrümmt sind. Dadurch lässt sich ein Lichtkegel sowohl kollimieren als auch hinsichtlich Querschnittskontur und/oder Leuchtdichteverteilung effektiv formen. Gleichzeitig lässt sich eine hohe Effizienz eines Leuchtmittels mit einem derartigen Primäroptikelement erreichen.

Die Querschnittsfläche des Primäroptikelements vergrößert sich in dessen Verlauf vom Lichteingang zum Lichtausgang bevorzugt stetig. Alternativ setzt sich das Primäroptikelement aus Abschnitten, die im Verlauf zum Lichtausgang eine sich stetig vergrößernde Querschnittsfläche aufweisen, und aus Abschnitten mit konstanter Querschnittsfläche zusammen. Auch dadurch kann eine Abstrahleffizienz verbessert werden.

Weitere Merkmale, Vorzüge und Zweckmäßigkeiten der Erfindung ergeben sich aus der nachfolgenden Beschreibung von Ausführungsbeispielen für das Leuchtmittel und das Primäroptikelement in Verbindung mit den Figuren 1 bis 20.

Es zeigen:
- Figur 1: eine schematische Darstellung eines ersten Ausführungsbeispiels des Leuchtmittels als Drahtgittermodell,
- Figur 2: eine erste perspektivische Darstellung des in Figur 1 dargestellten Leuchtmittels,
- Figur 3: eine zweite perspektivische Darstellung des in Figur 1 dargestellten Leuchtmittels,
- Figur 4: eine erste perspektivische Darstellung eines ersten Ausführungsbeispiels eines Primäroptikelements,
- Figur 5: eine zweite perspektivische Darstellung des in Figur 4 dargestellten Primäroptikelements,
- Figur 6: ein Beleuchtungsstärkebild eines mit dem in Figur 1 dargestellten Leuchtmittel unter Verwendung des in Figuren 4 und 5 dargestellten Primäroptikelementes beleuchteten Detektors,
- Figur 7: eine schematische Darstellung eines zweiten Ausführungsbeispiels des Leuchtmittels,
- Figur 8: eine schematische Darstellung eines dritten Ausführungsbeispiels des Leuchtmittels,
- Figur 9: eine schematische Darstellung eines zweiten Ausführungsbeispiels des Primäroptikelements,
- Figur 10: eine schematische Schnittansicht des in Figur 9 dargestellten Primäroptikelements,
- Figur 11: eine schematische Darstellung eines dritten Ausführungsbeispiels des Primäroptikelements,
- Figur 12: eine schematische Schnittansicht des in Figur 11 dargestellten Primäroptikelements,
- Figur 13: eine schematische Draufsicht auf den Lichteingang des in den Figuren 11 und 12 dargestellten Primäroptikelements,
- Figur 14: eine schematische Darstellung eines vierten Ausführungsbeispiels des Primäroptikelements,
- Figur 15: eine schematische Schnittansicht des in Figur 14 dargestellten Primäroptikelements,
- Figur 16: eine schematische Darstellung eines fünften Primäroptikelements,
- Figur 17: eine schematische Schnittansicht des in Figur 16 dargestellten Primäroptikelements,
- Figur 18: eine schematische Draufsicht auf den Lichtausgang des in den Figuren 16 und 17 dargestellten Primäroptikelements,
- Figur 19: eine schematische Darstellung eines sechsten Primäroptikelements, und
- Figur 20: eine schematische perspektivische Darstellung eines siebten Primäroptikelements mit und ohne einer Lichtquelle.

Die dargestellten Elemente der Figuren sind nicht notwendigerweise als maßstabsgerecht anzusehen, vielmehr können Sie zum besseren Verständnis teilweise übertrieben groß dargestellt sein. Gleiche oder gleich wirkende Elemente sind in den Figuren mit denselben Bezugszeichen versehen.

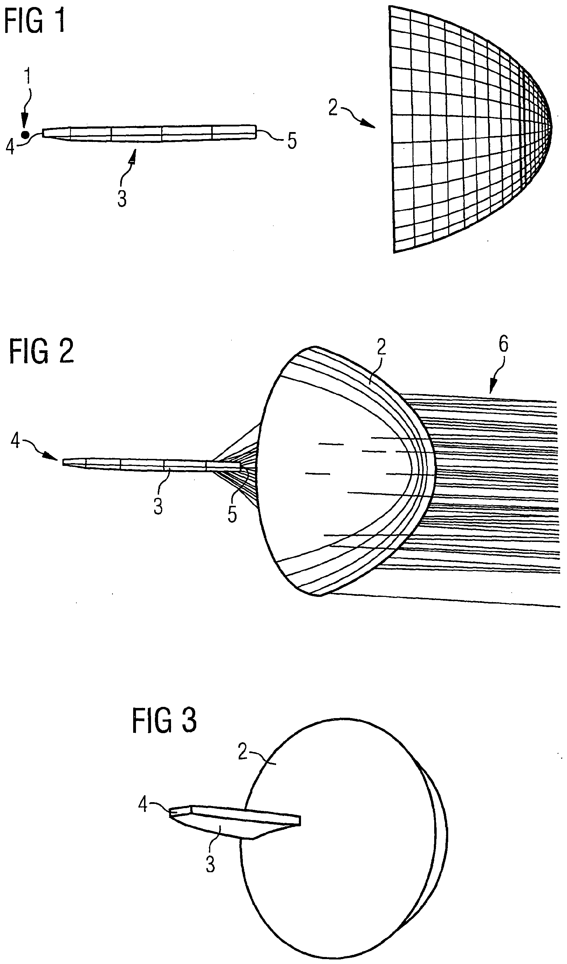

Das in den Figuren 1 bis 3 dargestellte Ausführungsbeispiel des Leuchtmittels mit einer vorgegebenen Abstrahlcharakteristik umfasst eine Lichtquelle 1 und eine nachgeordnete optische Vorrichtung 2 in Form einer Linse. Zwischen der Lichtquelle 1 und der Linse ist ein als speziell geformter CPC (Compound Parabolic Concentrator) ausgestaltetes Primäroptikelement 3 mit einer Lichteintrittsfläche 4 und einer Lichtaustrittsfläche 5 angeordnet. Aufgrund seiner lichtleitenden Funktionen kann das Primäroptikelement 3 als Lichtleiter bezeichnet werden, wobei die Eigenschaften und die Beeinflussung von eingestrahltem Licht deutlich über die Funktionalität eines Lichtleiters hinausgeht. Eine der vorgegebenen Abstrahlcharakteristik entsprechende Abstrahlcharakteristik wird durch Projektion der Lichtaustrittsfläche 5 mittels der optischen Vorrichtung 1 erzielt.

Mittels der optischen Vorrichtung wird die Beleuchtungsstärkeverteilung auf z.B. dem Lichtausgang 5 umgesetzt in eine Richtungsverteilung oder Abstrahlcharakteristik.

In Figur 2 ist zur Veranschaulichung eine Schar von Lichtstrahlen dargestellt, die mittels eines Raytracing-Verfahrens ermittelt wurde.

Als Lichtquelle 1 dient bevorzugt eine LED oder ein Verbund mehrerer LEDs.

Weiter bevorzugt werden hierbei Weißlicht-LEDs verwendet. Derartige LEDs enthalten beispielsweise einen im blauen Spektralbereich emittierenden Halbleiterchip, dem ein Lumineszenzkonversionselement nachgeordnet ist. Das Lumineszenzkonversionselement wandelt einen Teil des von dem Halbleiterkörper erzeugten Lichts in Licht einer anderen Wellenlänge, etwa im gelb-orangen Spektralbereich, um, so dass insgesamt der Eindruck weißen Lichts entsteht. Im Hinblich auf einen homogenen Farbeindruck ist es vorteilhaft, das Lumineszenzkonversionselement schichtartig, beispielsweise in Form einer Leuchtstoffschicht, auf den Halbleiterkörper aufzubringen.

Allerdings wird bei der Projektion einer solchen LED die leuchtende Oberfläche des Halbleiterchips selbst abgebildet. Dies erschwert die Realisierung von Helligkeitsverläufen, so dass hierfür herkömmlicherweise in der Regel ein zusätzlicher Diffusor erforderlich ist.

Bei der vorliegenden Erfindung hingegen wird das von dem Halbleiterkörper und dem Lumineszenzkonversionselement erzeugte Licht in dem Lichtleiter, beispielsweise dem speziell ausgeformten CPC, gesammelt, gemischt, gerichtet und wieder abgestrahlt. Ein gesonderter Diffusor kann entfallen.

Als Lichtemissionsdiode eigenen sich insbesondere Flächenstrahler, wie zum Beispiel Dünnfilm-Leuchtdiodenchips.

Ein Dünnfilm-Leuchtdiodenchip zeichnet sich insbesondere durch folgende charakteristische Merkmale aus:
- an einer zu einem Trägerelement hin gewandten ersten Hauptfläche einer strahlungserzeugenden Epitaxieschichtenfolge ist eine reflektierende Schicht aufgebracht oder ausgebildet, die zumindest einen Teil der in der Epitaxieschichtenfolge erzeugten elektromagnetischen Strahlung in diese zurückreflektiert;
- die Epitaxieschichtenfolge weist eine Dicke im Bereich von 20*µ*m oder weniger, insbesondere im Bereich von 10 *µ*m auf; und
- die Epitaxieschichtenfolge enthält mindestens eine Halbleiterschicht mit zumindest einer Fläche, die eine Durchmischungsstruktur aufweist, die im Idealfall zu einer annähernd ergodischen Verteilung des Lichtes in der epitaktischen Epitaxieschichtenfolge führt, d.h. sie weist ein möglichst ergodisch stochastisches Streuverhalten auf.

Ein Grundprinzip eines Dünnschicht-Leuchtdiodenchips ist beispielsweise in I. Schnitzer et al., Appl. Phys. Lett. 63 (16), 18. Oktober 1993, 2174 - 2176 beschrieben, deren Offenbarungsgehalt insofern hiermit durch Rückbezug aufgenommen wird.

Ein Dünnfilm-Leuchtdiodenchip ist in guter Näherung ein Lambert'scher Oberflächenstrahler und eignet sich von daher besonders gut für die Anwendung in dem Leuchtmittel, insbesondere für einen Scheinwerfer.

Bei einer weiteren Variante der Erfindung kann als LED eine LED mit mehreren Halbleiterkörpern, die zum Beispiel im roten, grünen und blauen Spektralbereich emittieren, verwendet werden. Durch entsprechende Ansteuerung der Halbleiterchip kann mit derartigen LEDs ebenfalls weißes Licht erzeugt werden, wobei wiederum eine Mischung des von den verschiedenen Halbleiterkörpern emittierten Lichts vorteilhaft ist.

Bei einer weiteren Variante von Weißlicht-LEDs ist das Lumineszenzkonversionselement als eine den Halbleiterkörper einhüllende Formmasse, etwa in Form eines Vergusses, ausgeführt, in der entsprechende Leuchtstoffpartikel verteilt sind. Als Formmasse eignet sich beispielsweise ein Reaktionsharz, etwa ein Epoxidharz oder - aufgrund der höheren Strahlungsstabilität bevorzugt - ein Silikonharz. Bei dieser Variante kann zwar prinzipiell ein inhomogenerer Farbeindruck aufgrund unterschiedlicher Weglängen der erzeugten Strahlung in der Formmasse entstehen. Diese Farbinhomogenität wird aber vorteilhafterweise durch die Mischung der Strahlung in dem Lichtleiter ausgeglichen.

Die Lichtaustrittsfläche 5 des Lichtleiters ist entsprechend der vorgegebenen Abstrahlcharakteristik geformt, wobei sich durch die jeweilige Wahl der Außenkontur scharfe Hell-Dunkel-Übergänge realisieren lassen, ohne dass ein Shutter erforderlich ist. Entsprechend bezieht sich die vorliegende Erfindung insbesondere auf ein Leuchtmittel mit vorgegebener Abstrahlcharakteristik, die keinen Shutter aufweist.

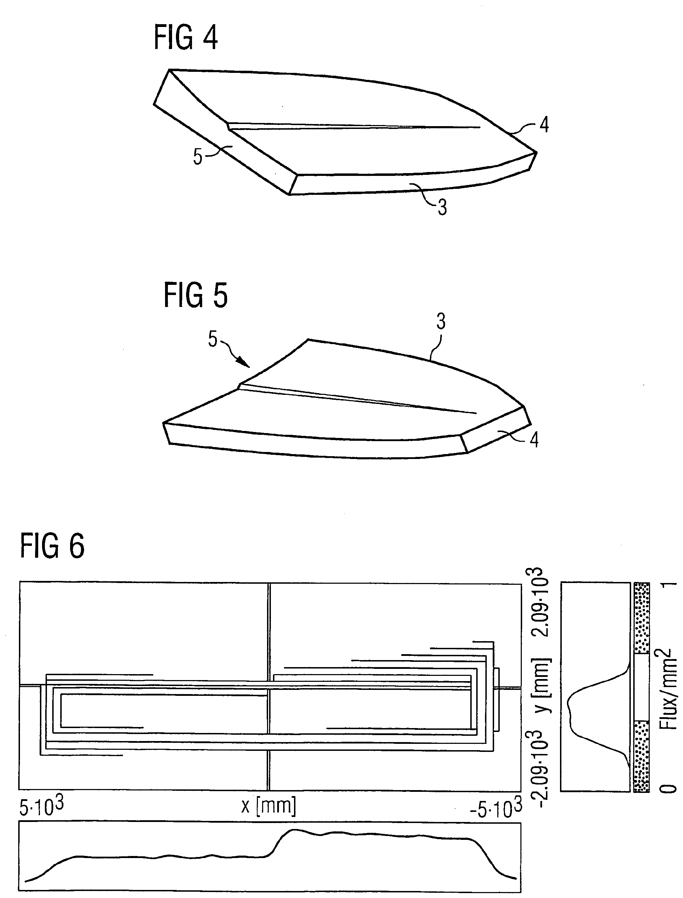

Die Form der Lichtaustrittsfläche 5 ist prinzipiell durch Rückabbildung der vorgegebenen Abstrahlcharakteristik durch die optische Vorrichtung 1 auf die Ebene der Lichtaustrittsfläche 5 ermittelbar. Die Lichteintrittsfläche 4 ist hingegen im Hinblick auf eine optimale Lichteinkopplung an die Lichtquelle, etwa die LED bzw. die LEDs der oben genannten Art, angepasst. Eine perspektivische Detailansicht eines Lichtleiters in Form eines speziell geformten CPCs für einen Kraftfahrzeugfrontscheinwerfer ist in den Figuren 4 und 5 dargestellt.

Das in den Figuren 4 und 5 dargestellte Primäroptikelement ist in der Art eines nicht abbildenden Konzentrators ausgebildet. Allerdings ist das konzentratorartige Primäroptikelement 3 nicht für eine übliche Verwendung eines Konzentrators vorgesehen. Vielmehr wird das Primäroptikelement 3, verglichen mit einer üblichen Verwendung eines Konzentrators, bei seiner Verwendung in umgekehrter Richtung durchstrahlt. Entsprechend weist der Lichteingang 4 bevorzugt eine geringere Querschnittsfläche auf als der Lichtausgang 5 des Primäroptikelements 3.

Das Primäroptikelement 3 ist in der Art eines dielektrischen Konzentrators ausgebildet, dessen Grundkörper ein aus einem dielektrischen Material mit geeignetem Brechungsindex bestehender Vollkörper ist. Der Lichteingang 4 ist in Form einer Lichteingangsfläche und der Lichtausgang 5 als Lichtausgangsfläche des Grundkörpers ausgebildet. Lichteingang 4 und Lichtausgang 5 sind über Seitenflächen des Primäroptikelements 3 miteinander verbunden, an denen Licht mittels Totalreflexion umgelenkt wird.

Zumindest der Lichtausgang des Primäroptikelements 3 weist eine lange Form auf, das heißt sein Querschnitt umfasst eine Haupterstreckung und eine geringste Erstreckung beziehungsweise eine Länge und eine Breite, wobei die Länge größer ist als die Breite. Die Seitenflächen des Primäroptikelements 3 sind gekrümmt ausgebildet, wobei die Seitenflächen, die die Breitseiten des Lichtausgangs 5 mit dem Lichteingang verbinden, eine stärkere Krümmung aufweisen als die Seitenflächen, die die Längsseiten des Lichtausgangs 5 mit dem Lichteingang 4 verbinden. Die Seitenflächen sind als Freiformflächen ausgebildet, deren Form daraufhin optimiert ist, dass eine vorgesehene Abstrahlcharakteristik durch gezielte Reflektionen an diesen Seitenflächen im Primäroptikelement 3 ausgebildet werden kann.

Die Seitenflächen sind insbesondere derart geformt, dass eingestrahltes Licht durch interne Reflektionen sowohl gemischt als auch kollimiert wird, so dass ein in dem Lichteingang 4 eingestrahltes Lichtbild nicht auf dem Lichtausgang 5 abgebildet wird und dass das eingestrahlte Licht durch die internen Reflektionen auf Seite des Lichtausgangs eine geringere Divergenz aufweist als auf Seite des Lichteingangs.

Zudem wird das Licht z.B. im Primäroptikelement durch die gezielten Reflektionen bevorzugt auf einen begrenzten Bereich des Lichtausgangs gelenkt, so dass eine inhomogene Leuchtdichteverteilung mit einem sogenannten Hotspot entsteht. Dieser Hotspot befindet sich beim Lichtausgang 5 in der Nähe einer der Längsseiten.

Bei dem in den Figuren 4 und 5 dargestellten Primäroptikelement weist diese Längsseite zwei im wesentlichen gerade Teilabschnitte auf, deren Haupterstreckungsrichtungen derart zueinander geneigt sind, dass sie auf der Außenseite des Lichtausgangs einen Winkel von etwa 165° einschließen. Ein derart ausgebildetes Primäroptikelement 3 eignet sich speziell für ein Scheinwerferleuchtmittel eines Kraftfahrzeugs. Die Abstrahlcharakteristik eines Scheinwerfers für ein Kraftfahrzeug ist vorgegeben und derart beschaffen, dass die Fahrbahn in Fahrtrichtung am hellsten ausgeleuchtet wird und der Lichtkegel zu den Außenseiten hin, das heißt einerseits auf der Seite entgegenkommender Fahrzeuge und andererseits auf der Seite des Straßenrandes, eine geringere Lichtintensität aufweist.

Um ein Blenden von Fahrern entgegenkommender Fahrzeuge zu vermeiden ist es zudem vorteilhaft, dass die Oberkante des Lichtkegels auf dieser Seite im wesentlichen horizontal verläuft und einen scharfen Hell/Dunkel-Übergang aufweist. Dagegen ist für die Seite der Fahrbahn, die dem Gegenverkehr abgewandt ist, eine Oberkante des Lichtkegels vorgegeben, die gegenüber der Horizontalen schräg verläuft, beispielsweise mit einem Winkel von etwa 15°. Derartige Spezifikationen lassen sich mit einem Primäroptikelement, wie es vorangehend anhand der Figuren 4 und 5 erläutert worden ist, beziehungsweise mit einem Leuchtmittel, das vorhergehend anhand der Figuren 1 bis 3 erläutert worden ist, besonders gut bewerkstelligen. Gleichzeitig ist eine effiziente Nutzung von in den Lichteingang des Primäroptikelements 3 eingekoppelten Lichts möglich.

Figur 6 zeigt ein Beleuchtungsstärkebild eines Detektors im Abstand von 25 m von einem vorhergehend anhand den Figuren 1 bis 5 erläuterten Leuchtmittel.

Die Darstellung erstreckt sich in x-Richtung von -5000 mm bis 5000 mm und in y-Richtung von etwa -2000 mm bis 2000 mm. Der Lichtfluss entlang der eingezeichneten Achsen ist ebenfalls aufgetragen. Hervorzuheben sind die scharfen Hell/Dunkel-Übergänge, die mit der vorliegenden Erfindung ohne Shutter realisierbar sind. Zudem ist an dem Beleuchtungsstärkebild deutlich erkennbar, dass die Leuchtdichteverteilung in der Mitte des Querschnitts des Lichtkegels einen hellsten Bereich, einen Hotspot aufweist, siehe das Maximum in x-Richtung bei etwa 500 mm. Maßgeblich für die Erzeugung eines derartigen Beleuchtungsstärkebildes mit dem Leuchtmittel ist einerseits die spezielle Ausgestaltung und Form des Primäroptikelements 3, insbesondere von dessen reflektierenden Flächen, sowie die gezielte Projektion des von dem Primäroptikelements 3 erzeugten Lichtbildes mittels der optischen Vorrichtung 2. Dabei kann entweder der Lichtausgang oder eine imaginäre Fläche, die im Strahlengang und insbesondere zwischen dem Lichtausgang und der optischen Vorrichtung 2 angeordnet ist, mittels der optischen Vorrichtung projiziert werden.

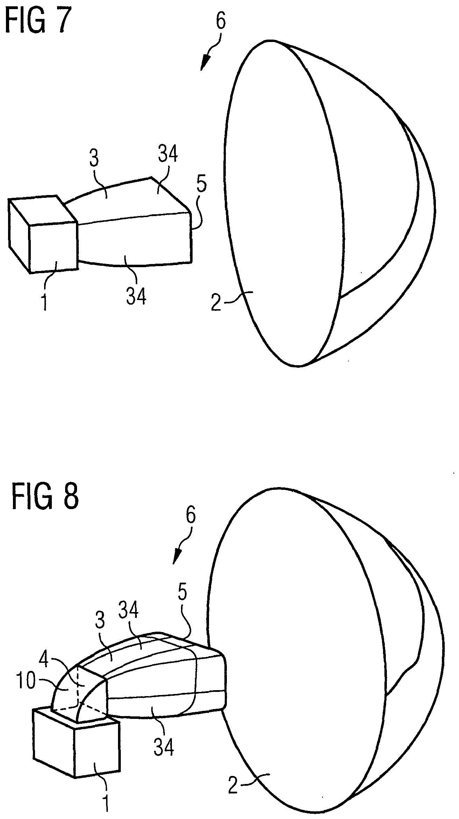

Bei dem in Figur 7 dargestellten Leuchtmittel 6 weist der Lichtausgang 5 einen im wesentlichen rechteckigen Querschnitt auf, dessen Ecken verrundet sind. Durch das Verrunden der Ecken lässt sich der Helligkeitsverlauf am Hell/Dunkel-Übergang des zu emittierenden Lichtkegels etwas verwischen. Während einerseits ein möglichst abrupter Hell/Dunkel-Übergang an einer Längsseite und Oberkante des Lichtkegels erwünscht ist, soll dieser Hell/Dunkel-Übergang andererseits nicht allzu scharf ausgebildet sein, da dies insbesondere bei Scheinwerferleuchtmitteln für Kraftfahrzeuge störend sein kann.

Da mit dem Primäroptikelement 3 aufgrund von dessen Form und dessen Ausgestaltung der Seitenflächen 34 bei effizienter Ausnutzung eingestrahlten Lichtes besonders scharfe Hell/Dunkel-Übergänge erzielbar sind, kann es vorteilhaft sein, zusätzliche Maßnahmen zur Verwischung oder Abschwächung dieser Übergänge ohne signifikante Einbußen hinsichtlich der emittierten Strahlungsintensitätsraumwinkel vorzunehmen. Zusätzlich oder alternativ zu einer Verrundung mindestens einer Ecke eines Lichtausganges 5 mit einem im wesentlichen eckigen Querschnitt kann die optische Vorrichtung 2 derart ausgebildet sein, dass die Hell/Dunkel-Übergänge leicht verwischt werden. Die optische Vorrichtung ist als eine Projektionslinse ausgebildet, deren Fokusbereich auf einer gekrümmten imaginären Fläche liegt. Ein Innenbereich des Fokusbereiches liegt z.B. auf einer Haupterstreckungsebene des Lichtausganges 5, während Außenbereiche des Fokusbereiches auf imaginären Teilflächen liegen, die von der Haupterstreckungsebene des Lichtausganges 5 weggekrümmt sind. Die optische Vorrichtung 2 ist hierfür als Freiformlinse in der Art einer Projektionslinse ausgebildet. Dadurch kann erreicht werden, dass die Kontur des Lichtausgangs außerhalb des Schärfenbereiches der Projektionslinse liegt, womit ein optimaler Verlauf des Hell/Dunkel-Übergangs eines abgestrahlten Lichtkegels gemäß einer vorgegebenen Abstrahlcharakteristik effektiv gestaltet werden kann. Diese Maßnahmen zum Einstellen des Hell/Dunkel-Übergangs können bei allen Primäroptikelementen beziehungsweise allen Leuchtmitteln gemäß der Erfindung angewandt werden.

Das in Figur 8 dargestellte Leuchtmittel 6 umfasst als einen Unterschied zu dem vorhergehend anhand Figur 7 erläuterten Leuchtmittel ein optisches Umlenkelement 10, das in den Strahlengang zwischen der Lichtquelle 1 und dem Primäroptikelement 3 angeordnet ist. Ein derartiges Umlenkelement 10 ermöglicht es, die Lichtquelle 1 unabhängig von einer Hauptabstrahlrichtung des Primäroptikelementes 3 anzuordnen oder zu orientieren. Beispielsweise kann die Lichtquelle 1 derart zum Primäroptikelement 3 ausgerichtet sein, dass ihre Hauptabstrahlrichtung im wesentlichen senkrecht zu derjenigen des Primäroptikelementes verläuft.

Das Umlenkelement 10 kann als dielektrischer Vollkörper mit reflektierenden Außenflächen oder auch als ein Hohlkörper mit reflektierenden Innenflächen ausgebildet sein. Sein Lichteingang ist bevorzugt an die Lichtquelle angepasst und sein Lichtausgang schließt bevorzugt mit angepasstem Querschnitt und lückenlos an den Lichteingang 4 des Primäroptikelementes 3 an.

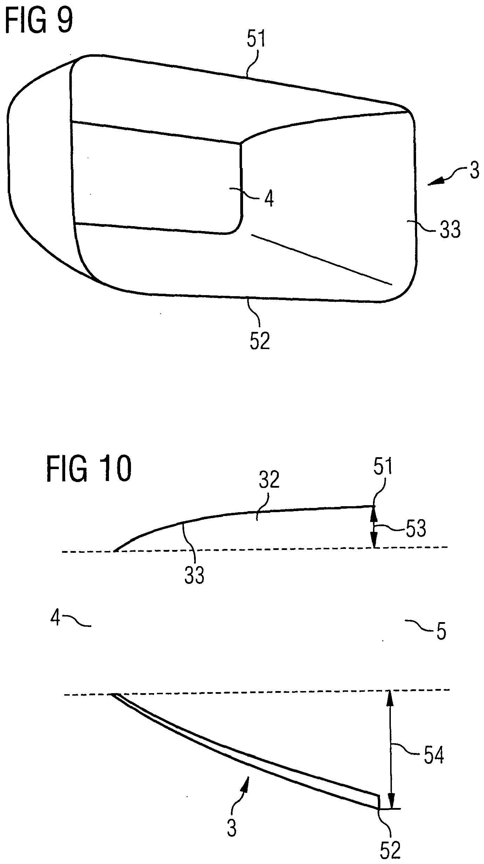

Das in den Figuren 9 und 10 dargestellte Primäroptikelement 3 weist einen Grundkörper auf, der einen Hohlraum 32 definiert. Die den Hohlraum begrenzenden Innenwände des Grundkörpers sind reflektierend ausgebildet. Bei einem derartigen Primäroptikelement 3 mit einem Hohlraum 32 und reflektierenden Innenwänden 33 kann die Lichtquelle teilweise oder vollständig innerhalb des Primäroptikelementes angeordnet werden. Alternativ das Primäroptikelement 3 auf der Seite des Lichteingangs 4 in einen die Lichtquelle umgebenden Rahmen fortgesetzt werden.

In einer weiteren Alternative kann das Primäroptikelement als dielektrisches Element ausgebildet sein, an dessen Grenzflächen aufgrund eines Brechungsindexsprunges Totalreflektion stattfindet. Derartige dielektrische Primäroptikelemente haben, verglichen mit einem Primäroptikelement mit einem Hohlraum, eine erhöhte Auskoppeleffizienz, da aufgrund der internen Totalreflektion mit einer Reflektivität von bis zu 100 % weniger Licht innerhalb des Primäroptikelementes absorbiert wird.

Der Lichteingang 4 weist eine lange Form auf. Er ist beispielsweise für eine Mehrzahl von Leuchtdiodenchips vorgesehen, die entlang einer Geraden angeordnet sind und die beispielsweise eine quadratische Strahlungsauskoppelfläche aufweisen. Alternativ kann der Querschnitt des Lichteinganges 4 auch nicht lang sein, sondern beispielsweise eine Form in der Art eines Quadrates mit oder ohne verrundeten Kanten aufweisen. Der Lichteingang kann ebenso einen kreisförmigen Querschnitt oder allgemein einen Querschnitt mit einer vierstufigen Symmetrie, beispielsweise in der Art eines geradzahligen Vieleckes aufweisen.

Der Lichtausgang 5 weist einen langgestreckten Querschnitt mit einer ersten Längsseite 51, einer zweiten Längsseite 52 sowie zwei die beiden Längsseiten miteinander verbindenden Breitseiten auf. Die erste Längsseite 51 weist zu dem Lichteingang 4 einen geringeren Abstand auf als die gegenüber liegende zweite Längsseite 52, wie in der schematischen Schnittansicht von Figur 10 erkennbar ist. Der Abstand 53 der ersten Längsseite 51 zu einer Projektion des Lichteingangs 4 auf eine Haupterstreckungsebene des Lichtausgangs 5 ist geringer als der Abstand 54 der zweiten Längsseite 52 zu dieser Projektion des Lichteingangs 4.

Die reflektierenden Flächen 33 des Primäroptikelementes 3, welche die beiden Längsseiten 51, 52 mit dem Lichteingang 4 verbinden, sind beide konvex gekrümmt. Die Seitenfläche, welche die erste Längsseite 51 mit dem Lichteingang 4 verbindet, weist, bezogen auf eine Haupterstreckungsrichtung des Primäroptikelementes 3, einen steileren Verlauf auf als der gegenüber liegende Abschnitt der Seitenflächen, der die zweite Längsseite 52 mit dem Lichteingang 4 verbindet. Die Seitenflächen, welche die Breitseiten des Lichtausgangs 5 mit dem Lichteingang 4 verbinden, weisen ebenfalls eine konvexe Krümmung auf. Diese Krümmung ist beispielsweise stärker ausgeprägt als die Krümmung der übrigen Seitenwände.

Mit dem in den Figuren 9 und 10 dargestellten Primäroptikelement 3 lässt sich mit Vorteil eine inhomogene Leuchtdichteverteilung auf der Seite des Lichtausgangs 5 erzeugen. Diese inhomogene Leuchtdichteverteilung weist insbesondere mindestens einen hellsten Bereich in der Nähe der ersten Längsseite 51 auf. Somit eignet sich das Primäroptikelement ebenfalls insbesondere für Scheinwerferleuchtmittel in Kraftfahrzeugen.

Zusätzlich zu einer Abbildung einer vorgegebenen Leuchtdichteverteilung auf dem Lichtausgang oder auf einer dem Lichtausgang in Abstrahlrichtung nachgeordneten imaginären Flächen wird Licht, welches in das Primäroptikelement 3 eingestrahlt wird, in diesem gemischt und kollimiert.

Es hat sich herausgestellt, dass die Strahlformung zu einem Lichtkegel mit vorgegebener Form und Leuchtdichteverteilung insbesondere dann besonders effektiv ist, wenn die erste Längsseite 51 des Lichtausgangs 5 einen Abstand 53 zu der Projektion des Lichteingangs 4 auf den Lichtausgang 5 aufweist (angedeutet in Figur 10 durch die gestrichelten Linien) und wenn dieser Abstand 53 kleiner ist als der Abstand 54 der zweiten Längsseite 52 zu der Projektion des Lichteingangs 4. Mit anderen Worten ist der Lichteingang 4, betrachtet in einer Draufsicht auf den Lichtausgang 5, zu der ersten Längsseite 51 hin verschoben.

Eine derartige Anordnung von Lichtausgang 5 und Lichteingang 4 zueinander ermöglicht es, die Seitenflächen, die den Lichteingang 4 mit dem Lichtausgang 5 verbinden, hinsichtlich der Erzielung einer möglichst hohen Leuchtdichte, einer möglichst großen Kollimierung, dem Abbilden einer gewünschten Leuchtdichteverteilung und/oder dem Ausbilden eines vorgesehenen Querschnittes eines Lichtkegels optimal auszubilden. Die Seitenflächen sind insbesondere als Freiformflächen ausgebildet, deren Form individuell hinsichtlich einiger oder aller der vorhergehend genannten Parameter optimiert worden ist.

Neben der Form der Seitenflächen ist auch der Abstand zwischen Lichteingang 4 und Lichtausgang 5 beziehungsweise die Länge des Primäroptikelementes 3 von Bedeutung. Je größer dieser Abstand ist beziehungsweise je länger das Primäroptikelement 3 ist, desto besser ist die Durchmischung und/oder der Grad der Kollimierung die bzw. der mit dem Primäroptikelement 3 erzielt werden kann. Dagegen sind Primäroptikelemente mit einer geringen Länge vorteilhafterweise sehr kompakt.

Das in den Figuren 9 und 10 dargestellte Primäroptikelement weist beispielsweise eine Länge auf, die mindestens das Zweifache der Breite des Lichteinganges 4 und höchstens das Zwanzigfache der Breite des Lichteinganges 4 beträgt. Die Länge, das heißt der Abstand zwischen dem Lichteingang 4 und dem Lichtausgang 5 beträgt zum Beispiel mindestens 3 mm, bevorzugt mindestens 5 mm und höchstens 15 mm.

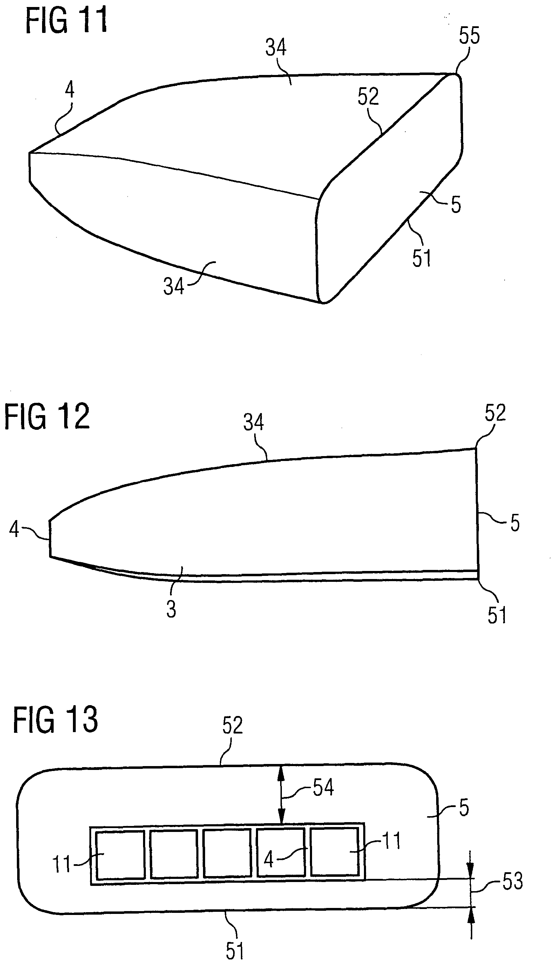

Das in den Figuren 11 bis 13 dargestellte Primäroptikelement weist dagegen eine Länge auf, die mindestens das Fünffache der Breite des Lichteinganges 4, bevorzugt mindestens das Zehnfache der Breite des Lichteinganges 4, besonders bevorzugt das Fünfzehnfache der Breite des Lichteinganges 4 beträgt. Beispielsweise weist das Primäroptikelement eine Länge von mehr als oder gleich dem Zwanzigfachen der Breite des Lichteinganges 4 auf. Die Länge beträgt zum Beispiel mindestens 10 mm, bevorzugt mindestens 15 mm oder mehr als oder gleich 20 mm.

Sowohl das in den Figuren 9 und 10 als auch das in den Figuren 11 bis 13 dargestellte Primäroptikelement weist einen Lichtausgang 5 auf, dessen Querschnitt in der Art eines Rechteckes ausgebildet ist, wobei die Ecken des Rechteckes verrundet sind. Wie vorhergehend bereits erwähnt, lässt sich dadurch ein scharfer hell/dunkel Übergang eines zu emittierenden Lichtkegels etwas abschwächen. Der Verlauf und insbesondere die Länge des hell/dunkel Überganges lässt sich durch diese Maßnahme einstellen. Bevorzugt weist nicht nur der Querschnitt des Lichtausganges 5, sondern auch der Querschnitt zumindest eines Abschnittes des Primäroptikelementes 3 in der Nähe des Lichtausganges 5 verrundete Kanten auf.

Wie in Figuren 12 und insbesondere 13 zu erkennen ist, weist eine erste Längsseite 51 des Lichtausganges 5 einen geringeren Abstand zum Lichteingang 4 auf, als eine gegenüberliegende zweite Längsseite 52 des Lichtausganges 5. Sowohl die erste Längsseite 51 als auch die zweite Längsseite 52 weisen einen lateralen Abstand zu den Längsseiten des Lichteinganges 4 auf, dass heißt, die Längsseiten 51, 52 des Lichtausganges sind, gesehen in einer Draufsicht auf den Lichtausgang 5 (siehe Figur 13), von den Längsseiten des Lichteinganges 4 beabstandet. Dabei ist der laterale Abstand 53 der ersten Längsseite 51 kleiner als der laterale Abstand 54 der zweiten Längsseite 52 des Lichtausganges 5.

Die Längsseiten des Lichteinganges 4 sind diejenigen, deren Haupterstreckungsrichtung im Wesentlichen parallel zu den Längsseiten 52, 51 des Lichtausganges 5 verläuft. Die übrigen Seiten des Lichteinganges 4 sind dessen Breitseiten. Diese Bezeichnungen gelten vorliegend auch dann, wenn die Breitseiten des Lichteingangs gleich lang oder länger sind als dessen Längsseiten.

Der Lichteingang ist für eine Mehrzahl von Lumineszenzdioden 11 vorgesehen, die in der Form einer Linie angeordnet sind. Die Linie hat bevorzugt einen geraden Verlauf. Die Form der Linie kann jedoch auch Krümmungen oder Ecken aufweisen. Die Linie weist jedoch bevorzugt eine gestreckte Form auf.

Die Hauptleiterchips sind hierzu besonders bevorzugt in einer einzigen Reihe angeordnet. Sie können jedoch auch in mehreren Reihen, beispielsweise in zwei Reihen angeordnet sein, solange die Halbleiterchip insgesamt eine linienförmige Anordnung ergeben. Die Mehrzahl von Reihen ergibt in einem solchen Fall gemeinsam die Form der Linie.

Beispielsweise ist das Primäroptikelement für mindestens drei, bevorzugt für mindestens fünf Lumineszenzdioden 11 vorgesehen. Maximal weist ein Leuchtmittel mit einem Primäroptikelement 3 beispielsweise 20 oder 30 Lumineszenzdiodenchips auf.

Der Lichteingang 4 ist an die Größe der Lumineszenzdiodenchips 11 angepasst. Er weist eine Breite auf, die in etwa gleich groß oder geringfügig größer als die entsprechende Ausdehnung der Lumineszenzdiodenchips 11 ist. Die Breite des Lichteinganges, das heißt die Breite der Lichteingangsfläche oder der Lichteingangsöffnung, ist bevorzugt kleiner als oder gleich 1,5 mal so groß wie eine entsprechende laterale Ausdehnung der Lumineszenzdioden 11, wobei die laterale Ausdehnung der Lumineszenzdioden entlang der Breite der Lichteingangsfläche bzw. Lichteingangsöffnung gemessen wird. Bevorzugt ist die Breite des Lichteingangs kleiner als oder gleich 1,25 mal so groß wie die laterale Ausdehnung der Lumineszenzdiodenchips 11. Beispielsweise beträgt die Breite des Lichteingangs 4 weniger als oder gleich 1,1 mal der entsprechenden lateralen Ausdehnung der Lumineszenzdiodenchips 11.

In einem Leuchtmittel mit einem derartigen Primäroptikelement 3 sind die Lumineszenzdiodenchips möglichst nah am Lichteingang 4 angeordnet. Sie weisen z.B. jeweils kein eigenes Leuchtdioden-Gehäuse auf, sondern ihre leuchtenden Körper, beispielsweise ihre Halbleiterkörper, sind in einem geringen Abstand zueinander von beispielsweise kleiner als oder gleich 100 *µ*m angeordnet. Bevorzugt werden als Leuchtmittel Halbleiterleuchtdioden verwendet, beispielsweise auf der Basis von AlInGaN. Zusätzlich oder alternativ ist es jedoch auch möglich, organische Leuchtdioden (OLEDs) zu verwenden. Insbesondere bei organischen Leuchtdioden ist es möglich, dass eine einzige Leuchtdiode linienförmig ausgebildet ist, dass heißt die Lichtaufkoppelfläche der Leuchtdiode ist linienförmig und bevorzugt gestreckt ausgebildet.

Die vorhergehend anhand der Figuren 9 bis 13 beschriebenen Primäroptikelemente 3 weisen beide einen Querschnitt auf, der in seinem Verlauf vom Lichteingang zum Lichtausgang 5 nicht kleiner wird. Die Querschnittsfläche wird bei diesen Primäroptikelementen bevorzugt stetig größer. Das Primäroptikelement kann jedoch auch Abschnitte aufweisen, in denen die Querschnittsfläche konstant ist. Generell ist es möglich, dass sich die Querschnittsform ändert, ohne dass sich die Querschnittsfläche ändert.

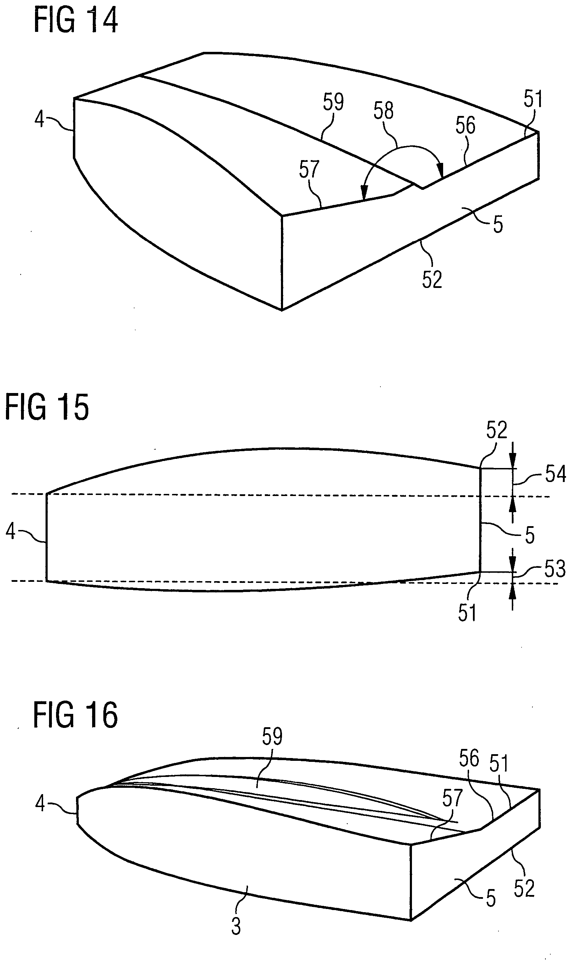

Bei den in den Figuren 14 und 15 sowie 16 bis 18 dargestellten Primäroptikelementen 3 gibt es im Verlauf vom Lichteingang 4 zum Lichtausgang 5 Abschnitte, in denen die Querschnittsfläche kleiner wird. Dabei durchläuft die Querschnittsfläche bevorzugt ein Maximum und wird im weiteren Verlauf zum Lichtausgang kleiner.

Besonders bevorzugt sind auch bei diesen Ausführungsformen sowohl die Seitenflächen, welche die erste Längsseite 51 des Lichtausganges 5 mit dem Lichteingang verbinden, als auch die Seitenflächen, welche die zweite Längsseite 52 des Lichtausganges 5 mit dem Lichteingang 4 verbinden, gekrümmt ausgebildet. Besonders bevorzugt sind sie als Freiformflächen ausgebildet und auf die Erzeugung eines Lichtkegels mit vorgegebenen Eigenschaften optimiert. Die vorgegebenen Eigenschaften umfassen beispielsweise eine höchste Divergenz, eine Leuchtdichteverteilung, eine Form des Lichtkegels sowie einen möglichst scharfen Helldunkelübergang entlang mindestens einer Längsseite des Lichtkegels.

Insbesondere eine inhomogene Leuchtdichteverteilung, die bevorzugt einen einzigen hellsten Bereich oder eine Mehrzahl nebeneinander angeordneter hellster Bereiche aufweist, kann durch interne Reflexionen an den speziell geformten Seitenflächen realisiert werden.

Der Lichtausgang 5 weist bei beiden Primäroptikelementen 3 eine lange Form auf, mit einer ersten Längsseite 51 und einer zweiten Längsseite 52. Die erste Längsseite 51 weist einen ersten Teilabschnitt 56 und einen zweiten Teilabschnitt 57 auf, deren Haupterstreckungsrichtungen derart zueinander geneigt sind, dass sie auf einer Außenseite des Lichtausgangs 5 einen Winkel 58 von größer als oder gleich 160° und kleiner als oder gleich 170° einschließen. Beispielsweise beträgt dieser Winkel 58 etwa 165°. Die Teilabschnitte 56, 57 sind bevorzugt jeweils gerade ausgeführt, sie können jedoch auch einen teilweise oder vollständig gekrümmten Verlauf aufweisen.

Der maximale Abstrahlwinkel ist bei den in den Ausführungsbeispielen dargestellten Primäroptikelementen asymmetrisch.

Bei dem in den Figuren 14 und 15 dargestellten Primäroptikelement 3 ist der Lichtausgang 5 derart lateral gegenüber dem Lichtausgang 4 verschoben, dass die erste Längsseite 51 des Lichtausgangs 5 lateral innerhalb des Bereiches des Lichteingangs 4 verläuft. Mit anderen Worten ist die erste Längsseite 51, gesehen in einer Draufsicht auf den Lichtausgang 5, teilweise innerhalb des Lichteingangs 4 angeordnet.

Sowohl die erste Längsseite 51 als auch die zweite Längsseite 52 weisen einen Abstand 53, 54 zu den Breitseiten des Lichteinganges 4 auf. Der laterale Abstand 53 der ersten Längsseite 51 des Lichtausgangs 5 zu der nächstgelegenen Breitseite des Lichteingangs 4 ist bevorzugt kleiner als der laterale Abstand 54 der zweiten Längsseite zu der nächstgelegenen Breitseite des Lichteingangs 4.

Der Querschnitt des Lichtausganges 5 weist eine Form mit einer Mehrzahl von Ecken auf. Diese Ecken können auch teilweise oder vollständig zum Einstellen des Verlaufes eines hell/dunkel Übergangs eines zu emittierenden Lichtkegels verrundet sein. Dies gilt ebenfalls für das in den Figuren 16 bis 18 dargestellte Primäroptikelement 3 sowie für alle anderen Primäroptikelemente, deren Querschnitt des Lichtausganges 5 Ecken aufweist.

Mit der im Längsschnitt bauchigen Form des Primäroptikelements 3 und der lateralen Anordnung von Lichteingang 4 und Lichtausgang 5 zueinander lässt sich ein Lichtkegel mit einer inhomogenen Leuchtdichteverteilung und einem vorgegebenen Querschnitt mit scharfen hell/dunkel Übergängen besonders gut erzeugen.

Die Lichtausgänge 5 der Primäroptikelemente 3 weisen eine sich verändernde Breite auf, so dass eine Hälfte des Lichtausganges 5 eine größere Querschnittsfläche aufweist als die andere, wobei die Hälften durch eine senkrecht zur zweiten Längsseite 52 verlaufende, gedachte Linie getrennt sind.

Bei dem in den Figuren 14 und 15 dargestellten Primäroptikelement weist die Seitenwand, welche die erste Längsseite 51 des Lichtausgangs 5 mit dem Lichteingang 4 verbindet, eine sich vom Lichteingang 4 zum Lichtausgang erstreckende Ausbeulung 59 auf. Die Ausbeulung 59 ist beispielsweise eckig ausgebildet. Sie dient zum Einstellen einer inhomogenen Leuchtdichteverteilung, die mittels dem Primäroptikelement 3 zu erzeugen ist. Licht, das im Bereich dieser Ausbeulung 59 reflektiert wird, erhält eine Vorzugsrichtung, es wird insbesondere in Richtung eines Bereiches für einen zu erzeugenden Hotspot der Leuchtdichteverteilung gelenkt.

Das in den Figuren 16 bis 18 dargestellte Primäroptikelement 3 weist ebenfalls eine Ausbeulung 59 auf, die sich auf der Seitenfläche befindet, welche den Lichteingang mit der ersten Längsseite 51 des Lichtausgangs 5 verbindet. Die Ausbeulung 59 weist beispielsweise eine gerundete Oberfläche auf, sie kann jedoch auch Ecken aufweisen. Sie erstreckt sich vom Lichteingang 4 aus in Richtung des Lichtausgangs 5 und bildet eine Art Lichtkanal an der Außenwand des Primäroptikelementes 3, mittels dem einem durch den Lichteingang 4 eingestrahlten Licht eine Vorzugsrichtung gegeben werden kann. Dies ist zur gezielten Abbildung einer inhomogenen Leuchtdichtverteilung auf dem Lichtausgang 5 oder auf einer imaginären Fläche, die teilweise mit dem Lichtausgang 5 überlappt oder die dem Lichtausgang 5 in einer Abstrahlrichtung des Primäroptikelementes 3 nachgeordnet ist, vorteilhaft.

Die Ausbeulung 59 erstreckt sich beispielsweise nur über einen Teil der Länge des Primäroptikelementes 3 und reicht beispielsweise nicht bis an den Lichtausgang 5 heran.

Das Primäroptikelement kann auf einer der ersten Ausbeulung gegenüberliegenden Seite der Seitenwände eine zweite Ausbeulung in der Art eines Lichtkanales aufweisen (nicht gezeigt). Die Lichtkanäle können beispielsweise in der Art eines Ellipsoides geformt sein, der aus dem Grundköper des Primäroptikelementes auf einer oder zwei Seitenflächen in Form von langgestreckten Ausbeulungen herausragt.

Die erste Längsseite 51 weist einen lateralen Abstand 53 vom Lichteingang 4 auf, der kleiner ist als der laterale Abstand 54 der gegenüberliegenden zweiten Längsseite 52 zum Lichteingang 4.

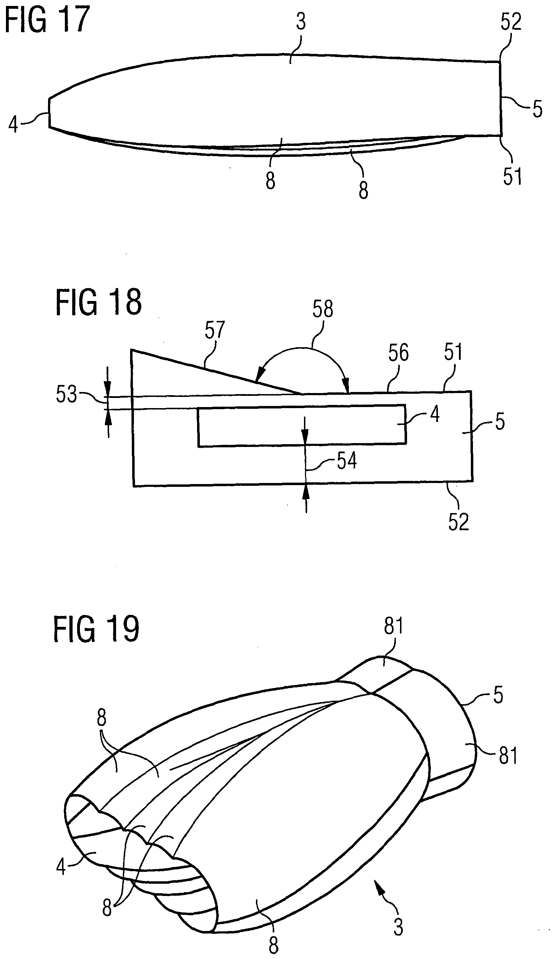

Für das Primäroptikelement kann es vorteilhaft sein, wenn der laterale Abstand 53 von der ersten Längsseite 51 zum Lichteingang mindestens 20%, bevorzugt mindestens 30% und besonders bevorzugt mindestens 50% geringer ist als der laterale Abstand 54 der zweiten Längsseite 52 zum Lichteingang, siehe zum Beispiel Figur 18.

Das in Figur 19 dargestellte Primäroptikelement 3 weist einen Lichteingang 4 auf, dessen Querschnitt eine größere Länge aufweist, als der Querschnitt des Lichtausgangs 5. Alternativ kann jedoch auch die Länge des Querschnitts des Lichtausgangs 5 gleich groß oder größer sein als diejenige des Querschnitts des Lichteingangs 4.

Das Primäroptikelement weist in einem Abschnitt auf Seite des Lichteinganges 4 eine Mehrzahl nebeneinander angeordneter und sich in Richtung Lichtausgang 5 erstreckender Lichtkanäle 8 auf, die seitlich ineinander übergehen und als eine Mehrzahl langgestreckter Ausbeulungen zu erkennen sind. Jeder dieser Lichtkanäle 8 ist beispielsweise einer separaten Lichtquelle, bevorzugt einem Lumineszenzdiodenchip zugeordnet. Das Primäroptikelement weist beispielsweise zwischen einschließlich drei und einschließlich zwanzig Lichtkanäle 8 auf, bevorzugt umfasst es mindestens fünf Lichtkanäle 8.

Im Verlauf vom Lichteingang 4 zum Lichtausgang 5 geht mindestens einer der Lichtkanäle 8 in den übrigen Lichtkanälen auf. Die Lichtkanäle 8 laufen bevorzugt zusammen, so dass die Anzahl der Lichtkanäle 8 in der Nähe des Lichtausgangs geringer wird. Beispielsweise münden fünf Lichtkanäle 8 in einen einzigen Lichtkanal oder in zwei Lichtkanäle 81. Alternativ können sich auch alle Lichtkanäle 8 vollständig vom Lichteingang 4 bis zum Lichtausgang 5 über die gesamte Länge des Primäroptikelementes 3 erstrecken.

Der Querschnitt des Lichtausgangs 5 weist eine größere Breite auf als der Querschnitt des Lichteingangs 4. Ein Primäroptikelement 3 mit mehreren seitlich ineinander übergehender Lichtkanäle ist besonders vorteilhaft zum Erzeugen einer gewünschten Abstrahlcharakteristik, insbesondere eines Lichtkegels mit einem Querschnitt, der eine inhomogene Leuchtdichteverteilung aufweist, und mit einer Querschnittsform, die einer vorgegebenen Form entspricht und einen abrupten hell/dunkel Übergang aufweist.

Die Lichtkanäle 8 weisen bevorzugt einen runden Querschnitt auf, so dass sie eine Vielzahl runder, langgestreckter Wölbungen ergeben. Alternativ oder zusätzlich kann einer oder können mehrere der Lichtkanäle 8 auch einen Querschnitt mit Ecken aufweisen.

Das in Figur 19 dargestellte Primäroptikelement weist einen an den Lichtausgang 5 angrenzenden Abschnitt auf, in dem die Querschnittsfläche im Verlauf zum Lichtausgang nach Durchlaufen eines Minimums wieder zunimmt, so dass ein Trichter am Ende des Primäroptikelements 3 gebildet.

Die Lichtkanäle sind z.B. langgestreckte, in den Grundkörper des Primäroptikelementes eingebrachte elliptische, parabolische oder auf sonstige Weise gekrümmte oder geformte Flächensegmente.

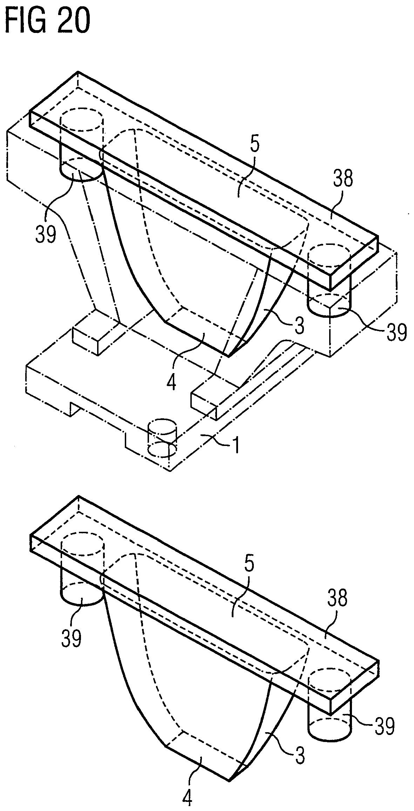

In Figur 20 ist dargestellt, wie das Primäroptikelement 3 an einer Lichtquelle 1 montiert und relativ zu dieser justiert werden kann. Hierzu weist das Primäroptikelement Passstifte 39 auf, die an Verlängerungen 38 angebracht sind, die von dem Grundkörper des Primäroptikelements 3 auf der Seite des Lichtausganges 5 wegragen. Das Primäroptikelement 3, die Verlängerungen 38 und die Passtifte 39 sind bevorzugt einstückig ausgebildet. Sie können jedoch auch zwei oder mehr Einzelteilen zusammengesetzt sein, z.B. mittels Kleben oder Stecken. Die Lichtquelle 1 weist Löcher für die Passstifte 39 auf, so dass das Primäroptikelement passgenau aufgesteckt werden kann.

## Patentansprüche

1. Leuchtmittel (6), umfassend eine Lichtquelle (1) und eine der Lichtquelle (1) in einer Abstrahlrichtung nachgeordnete optische Vorrichtung (2), bei dem zwischen der Lichtquelle (1) und der optischen Vorrichtung (2) ein Primäroptikelement (3) angeordnet ist, das in der Art eines nichtabbildenden Konzentrators ausgebildet ist, der, verglichen mit einer üblichen Verwendung eines Konzentrators, für eine Durchstrahlung in umgekehrter Richtung vorgesehen ist, und dessen Querschnittsfläche am Lichteingang kleiner ist als am Lichtausgang, wobei ein Lichtausgang (5) des Primäroptikelements (3), gesehen in einer Draufsicht, eine lange Form mit einer ersten Längsseite (51) und einer gegenüberliegenden zweiten Längsseite (52) aufweist, wobei die erste Längsseite (51) einen geringeren Abstand (53) zum Lichteingang (4) aufweist als die zweite Längsseite (52),
**dadurch gekennzeichnet, dass**
die optische Vorrichtung (2) in der Art einer Projektionslinse ausgebildet ist, deren Fokusbereich auf einer gekrümmten imaginären Fläche liegt, die dem Lichtausgang in einer Abstrahlrichtung nachgeordnet ist, oder sich vollständig oder teilweise innerhalb des Primäroptikelements befindet, und die sich in einem Strahlengang des von der Lichtquelle (1) emittierten Lichtes befindet.

2. Leuchtmittel (6) nach Anspruch 1,
**dadurch gekennzeichnet, dass** es ein Scheinwerferleuchtmittel ist.

3. Leuchtmittel (6) nach einem der vorhergehenden Ansprüche,
**dadurch gekennzeichnet, dass**
die optische Vorrichtung (2) eine Freiformlinse ist.

4. Leuchtmittel (6) nach einem der vorhergehenden Ansprüche,
**dadurch gekennzeichnet, dass**
die Lichtquelle (1) mindestens eine Lichtemissionsdiode (11) (LED) aufweist.

5. Leuchtmittel (6) nach Anspruch 4,
**dadurch gekennzeichnet, dass**
die Lichtquelle (1) eine Mehrzahl von Lichtemissionsdioden (11) aufweist, die in einer linienförmigen Anordnung angeordnet sind.

6. Leuchtmittel (6) nach Anspruch 4 oder 5,
**dadurch gekennzeichnet, dass**
die Lichtemissionsdiode (11) einen strahlungsemittierenden Halbleiterkörper und ein Lumineszenzkonversionselement aufweist, wobei das Lumineszenzkonversionselement zumindest teilweise Strahlung, die vom Halbleiterkörper erzeugt wird, in Strahlung anderer Wellenlänge umwandelt.

7. Leuchtmittel (6) nach Anspruch 6,
**dadurch gekennzeichnet, dass**
das Lumineszenzkonversionselement auf den Halbleiterkörper aufgebracht ist.

8. Leuchtmittel (6) nach Anspruch 7,
**dadurch gekennzeichnet, dass**
das Lumineszenzkonversionselement schichtförmig auf den Halbleiterkörper aufgebracht ist.

9. Leuchtmittel (6) nach einem der Ansprüche 4 bis 8,
**dadurch gekennzeichnet, dass**
der Lichteingang (4) eine Lichteingangsfläche oder eine Lichteingangsöffnung aufweist, die eine Breite (41) von kleiner als oder gleich 1,5 mal einer lateralen Ausdehnung der Lumineszenzdiode bzw. Lumineszenzdioden aufweist, wobei die laterale Ausdehnung der Lumineszenzdiode bzw. Lumineszenzdioden entlang der Breite (41) der Lichteingangsfläche bzw. Lichteingangsöffnung gemessen sind.

10. Leuchtmittel (6) nach Anspruch 9,
**dadurch gekennzeichnet, dass**
der Lichteingang (4) eine Lichteingangsfläche oder eine Lichteingangsöffnung aufweist, die eine Breite (41) von kleiner als oder gleich 1,25 mal einer lateralen Ausdehnung der Lumineszenzdiode bzw. Lumineszenzdioden aufweist, wobei die laterale Ausdehnung der Lumineszenzdiode bzw. Lumineszenzdioden entlang der Breite (41) der Lichteingangsfläche bzw. Lichteingangsöffnung gemessen sind.

11. Leuchtmittel (6) nach einem der vorhergehenden Ansprüche,
**dadurch gekennzeichnet, dass**
die Lichtquelle (1) weißes Licht emittiert.

12. Primäroptikelement, das in der Art eines nichtabbildenden Konzentrators ausgebildet ist, der, verglichen mit einer üblichen Verwendung eines Konzentrators, für eine Durchstrahlung in umgekehrter Richtung vorgesehen ist, wobei ein Lichtausgang (5) des Primäroptikelements, gesehen in einer Draufsicht, eine lange Form mit einer ersten Längsseite (51) und einer gegenüberliegenden zweiten Längsseite (52) aufweist, wobei die erste Längsseite (51) einen geringeren Abstand (53) zum Lichteingang (4) aufweist als die zweite Längsseite (52),
**dadurch gekennzeichnet, dass**
das Primäroptikelement (3) zumindest in einem Abschnitt auf Seite des Lichteinganges (4) eine Mehrzahl nebeneinander angeordneter und sich in Richtung Lichtausgang (5) erstreckender Lichtkanäle (8) umfasst, die jeweils einen runden Querschnitt aufweisen und seitlich ineinander übergehen, wobei die Lichtkanäle (8) im Verlauf zum Lichtausgang (5) derart zusammenlaufen, dass mindestens ein Lichtkanal (8) vollständig in den übrigen Lichtkanälen (8) aufgeht.

13. Primäroptikelement (3) nach Anspruch 12,
**dadurch gekennzeichnet, dass**
das Primäroptikelement (3) einen Grundkörper (31) aufweist, der einen Hohlraum (32) definiert und dessen Innenwand (33) zumindest für einen spektralen Teilbereich von sichtbarer elektromagnetischer Strahlung reflektierend ist.

14. Primäroptikelement (3) nach Anspruch 12,
**dadurch gekennzeichnet, dass** das Primäroptikelement (3) in der Art eines dielektrischen Konzentrators ausgebildet ist, dessen Grundkörper (31) ein aus einem dielektrischen Material mit geeignetem Brechungsindex bestehender Vollkörper ist, so dass über den Lichteingang (4) eingekoppeltes Licht durch Totalreflexion an seitlichen Grenzflächen (34) des Vollkörpers zum umgebenden Medium, die den Lichteingang (4) mit dem Lichtausgang (5) verbinden, reflektiert wird.

15. Primäroptikelement (3) nach einem der Ansprüche 12 bis 14,
**dadurch gekennzeichnet, dass** das Primäroptikelement (3) in der Nähe des Lichtausgangs eine unsymmetrische Querschnittsform aufweist.

16. Primäroptikelement (3) nach einem der Ansprüche 12 bis 15,
**dadurch gekennzeichnet, dass**
die erste Längsseite (51) des Lichtausgangs zwei Teilabschnitte (56, 57) aufweist, deren Haupterstreckungsrichtungen derart zueinander geneigt sind, dass sie auf einer Außenseite des Lichtausgangs einen Winkel (9) von kleiner als oder gleich 170° und größer als oder gleich 160° einschließen.

17. Primäroptikelement (3) nach einem der Ansprüche 12 bis 16,
**dadurch gekennzeichnet, dass**
das Primäroptikelement (3) in der Art eines Compound Parabolic Concentrators (CPC), eines Compound Elliptic Concentrators (CEC) oder eines Compound Hyperbolic Concentrators (CHC) ausgebildet ist.

18. Primäroptikelement (3) nach einem der Ansprüche 12 bis 17,
**dadurch gekennzeichnet, dass**
reflektierende Flächen des Primäroptikelements als Freiformflächen ausgebildet sind.

19. Primäroptikelement (3) nach Anspruch 18,
**dadurch gekennzeichnet, dass** die Freiformflächen derart ausgebildet sind, dass das Primäroptikelement (3) durch den Lichteingang (4) eintretendes Licht mit einer inhomogenen Lichtdichteverteilung auf dem Lichtausgang (5) oder einer imaginären Fläche, die dem Lichtausgang (5) in einer Abstrahlrichtung des Primäroptikelements nachgeordnet ist, abbildet.

20. Primäroptikelement (3) nach einem der Ansprüche 12 bis 19,
**dadurch gekennzeichnet, dass** das Primäroptikelement (3) reflektierende Flächen aufweist, die konvex gekrümmt sind.

21. Primäroptikelement (3) nach einem der Ansprüche 12 bis 20,
**dadurch gekennzeichnet,**
**dass** sich die Querschnittsfläche des Primäroptikelements in dessen Verlauf vom Lichteingang (4) zum Lichtausgang (5) stetig vergrößert oder
**dass** sich das Primäroptikelement (3) aus Abschnitten, die im Verlauf zum Lichtausgang (5) eine sich stetig vergrößernde Querschnittsfläche aufweisen, und Abschnitten mit konstanter Querschnittsfläche zusammensetzt.

22. Leuchtmittel (6) nach einem der Ansprüche 1-11,
**dadurch gekennzeichnet, dass**
das Primäroptikelement (3) gemäß einem der Ansprüche 12 bis 21 ausgebildet ist.

## Claims

1. A lighting means (6) comprising a light source (1) and an optical device (2) arranged downstream of the light source (1) in a radiation direction, in which a primary optical element (3) is arranged between the light source (1) and the optical device (2) and is formed in the manner of a non-imaging concentrator which, compared with a conventional use of a concentrator, is intended for transmission in the opposite direction, and whose cross-sectional area at the light input is smaller than at the light output, wherein a light output (5) of the primary optical element (3), viewed in plan view, has a long shape with a first longitudinal side (51) and an opposite second longitudinal side (52), wherein the first longitudinal side (51) has a smaller distance (53) from the light input (4) than the second longitudinal side (52),
**characterised in that**
the optical device (2) is formed in the manner of a projection lens, the focal region of which is located on a curved imaginary surface which is arranged downstream of the light output in a radiation direction, or is located completely or partially within the primary optical element, and which is located in a beam path of the light emitted by the light source (1).

2. Lighting means (6) according to claim 1,
**characterised in that** it is a headlight illuminant.

3. Lighting means (6) according to one of the preceding claims,
**characterised in that**
the optical device (2) is a free-form lens.

4. Lighting means (6) according to one of the preceding claims,
**characterised in that**
the light source (1) comprises at least one light-emitting diode (11) (LED).

5. Lighting means (6) according to claim 4,
**characterised in that**
the light source (1) comprises a plurality of light emitting diodes (11) arranged in a linear array.

6. Lighting means (6) according to claim 4 or 5,
**characterised in that**
the light emitting diode (11) comprises a radiation emitting semiconductor body and a luminescence conversion element, wherein the luminescence conversion element at least partially converts radiation generated by the semiconductor body into radiation of a different wavelength.

7. Lighting means (6) according to claim 6,
**characterised in that**
the luminescence conversion element is applied to the semiconductor body.

8. Lighting means (6) according to claim 7,
**characterised in that**
the luminescence conversion element is applied in layers to the semiconductor body.

9. Lighting means (6) in accordance with one of claims 4 to 8,
**characterised in that**
the light input (4) has a light input surface or a light input aperture having a width (41) less than or equal to 1.5 times a lateral extent of the luminescent diode or diodes, wherein the lateral extent of the luminescent diode or diodes is measured along the width (41) of the light input surface or aperture.

10. Lighting means (6) according to claim 9,
**characterised in that**
the light input (4) has a light input surface or a light input aperture having a width (41) less than or equal to 1.25 times a lateral extent of the luminescent diode or diodes, wherein the lateral extent of the luminescent diode or diodes is measured along the width (41) of the light input surface or aperture.

11. Lighting means (6) according to one of the preceding claims,
**characterised in that**
the light source (1) emits white light.

12. A primary optical element formed in the manner of a non-imaging concentrator which, compared to a conventional use of a concentrator, is intended for transmission in the opposite direction, wherein a light output (5) of the primary optical element, viewed in a plan view, has a long shape with a first longitudinal side (51) and an opposite second longitudinal side (52), the first longitudinal side (51) having a smaller distance (53) from the light input (4) than the second longitudinal side (52),
**characterised in that**
the primary optical element (3) comprises, at least in one section on the side of the light input (4), a plurality of light channels (8) which are arranged next to one another and extend in the direction of the light output (5), each light channel (8) having a circular cross-section and merging laterally into one another, the light channels (8) converging in the course of the light output (5) in such a way that at least one light channel (8) merges completely into the remaining light channels (8).

13. Primary optical element (3) according to claim 12,
**characterised in that**
the primary optical element (3) has a base body (31) which defines a cavity (32) and whose inner wall (33) is reflective at least for a spectral partial range of visible electromagnetic radiation.

14. Primary optical element (3) according to claim 12,
**characterised in that** the primary optical element (3) is designed in the manner of a dielectric concentrator, the base body (31) of which is a solid body consisting of a dielectric material with a suitable refractive index, so that light coupled in via the light input (4) is reflected by total reflection at lateral boundary surfaces (34) of the solid body to the surrounding medium, which connect the light input (4) to the light output (5).

15. Primary optical element (3) according to any of claims 12 to 14,
**characterised in that** the primary optical element (3) has an asymmetric cross-sectional shape in the vicinity of the light output.

16. Primary optical element (3) according to any of claims 12 to 15,
**characterised in that**
the first longitudinal side (51) of the light output has two partial sections (56, 57) whose main directions of extension are inclined with respect to one another in such a way that they enclose on an outside of the light output an angle (9) of less than or equal to 170° and greater than or equal to 160°.

17. Primary optical element (3) according to any of claims 12 to 16,
**characterised in that**
the primary optical element (3) is designed in the manner of a compound parabolic concentrator (CPC), a compound elliptic concentrator (CEC) or a compound hyperbolic concentrator (CHC) .

18. Primary optical element (3) according to any of claims 12 to 17,
**characterised in that**
reflecting surfaces of the primary optical element are designed as free-form surfaces.

19. Primary optical element (3) according to claim 18,
**characterised in that** the free-form surfaces are formed such that the primary optical element (3) images light entering through the light input (4) with an inhomogeneous light density distribution on the light output (5) or an imaginary surface downstream of the light output (5) in a radiation direction of the primary optical element.

20. Primary optical element (3) according to any of claims 12 to 19,
**characterised in that** the primary optical element (3) has reflecting surfaces which are convexly curved.

21. Primary optical element (3) according to one of claims 12 to 20,
**characterised in that**
the cross-sectional area of the primary optical element increases continuously over the course of the primary optical element from the light input (4) to the light output (5), or in that the primary optical element (3) is composed of sections which have a continuously increasing cross-sectional area in the course of the light output (5) and sections with a constant cross-sectional area.

22. Lighting means (6) according to one of the claims 1-11,
**characterised in that**
the primary optical element (3) is formed according to any one of claims 12 to 21.

## Revendications

1. Moyen d'éclairage (6) comprenant une source lumineuse (1) et un dispositif optique (2) disposé en aval de la source lumineuse (1) dans un sens d'émission, dans lequel un élément optique primaire (3) est disposé entre la source lumineuse (1) et le dispositif optique (2) et conçu à la manière d'un concentrateur à image floue qui est prévu pour un rayonnement traversant inverse par rapport à une utilisation habituelle d'un concentrateur, et dont la section transversale est moins importante à l'entrée de lumière qu'à la sortie de lumière, une sortie de lumière (5) de l'élément optique primaire (3) présentant, en vue en plan, une forme oblongue comportant un premier côté longitudinal (51) et un second côté longitudinal (52) en vis-à-vis, le premier côté longitudinal (51) présentant une distance inférieure (53) à l'entrée de lumière (4) que le second côté longitudinal (52),
**caractérisé en ce que**
le dispositif optique (2) est conformée à la manière d'une lentille de projection dont la zone de focalisation se trouve sur une surface courbe imaginaire disposée en aval de la sortie de lumière dans un sens d'émission ou qui se trouve entièrement ou en partie au sein de l'élément optique primaire, et qui se trouve dans une trajectoire optique de la lumière émise par la source lumineuse (1).

2. Moyen d'éclairage (6) selon la revendication 1,
**caractérisé en ce qu'**il s'agit d'un moyen d'éclairage prévu pour une lampe de phare.

3. Moyen d'éclairage (6) selon l'une des revendications précédentes,
**caractérisé en ce que**
le dispositif optique (2) est une lentille à forme aléatoire.

4. Moyen d'éclairage (6) selon l'une des revendications précédentes, **caractérisé en ce que**
la source lumineuse (1) comprend au moins une diode électroluminescente (11) (LED).

5. Moyen d'éclairage (6) selon la revendication 4, **caractérisé en ce que**
la source lumineuse (1) comporte une pluralité de diodes électroluminescentes (11) disposées selon un agencement linéaire.

6. Moyen d'éclairage (6) selon la revendication 4 ou la revendication 5,
**caractérisé en ce que**
la diode électroluminescente (11) comporte un corps semi-conducteur émetteur de rayonnement ainsi qu'un élément de conversion de luminescence, l'élément de conversion de luminescence convertissant au moins partiellement le rayonnement généré par le corps semi-conducteur en un rayonnement d'une longueur d'onde différente.

7. Moyen d'éclairage (6) selon la revendication 6,
**caractérisé en ce que**
l'élément de conversion de luminescence est déposé sur le corps semi-conducteur.

8. Moyen d'éclairage (6) selon la revendication 7,
**caractérisé en ce que**
l'élément de conversion de luminescence est appliqué sur le corps semi-conducteur sous forme de couche.

9. Moyen d'éclairage (6) selon l'une des revendications 4 à 8,
**caractérisé en ce que**
l'entrée de lumière (4) présente une surface d'entrée de lumière ou une ouverture d'entrée de lumière ayant une largeur (41) inférieure ou égale à 1,5 fois d'une extension latérale de la diode électroluminescente respectivement des diodes électroluminescentes, l'extension latérale de la diode électroluminescente respectivement des diodes électroluminescentes étant mesurée le long de la largeur (41) de la surface d'entrée de lumière respectivement l'ouverture d'entrée de lumière.

10. Moyen d'éclairage (6) selon la revendication 9,
**caractérisé en ce que**
l'entrée de lumière (4) présente une surface d'entrée de lumière ou une ouverture d'entrée de lumière ayant une largeur (41) inférieure ou égale à 1,25 fois d'une extension latérale de la diode électroluminescente respectivement des diodes électroluminescentes, l'extension latérale de la diode électroluminescente respectivement des diodes électroluminescentes étant mesurée le long de la largeur (41) de la surface d'entrée de lumière respectivement l'ouverture d'entrée de lumière.

11. Moyen d'éclairage (6) selon l'une des revendications précédentes,
**caractérisé en ce que**
la source lumineuse (1) émet de la lumière blanche.

12. Elément optique primaire conçu à la manière d'un concentrateur à image floue, qui est prévu pour un rayonnement traversant inverse par rapport à une utilisation habituelle d'un concentrateur, une sortie de lumière (5) de l'élément optique primaire présentant, en vue en plan, une forme oblongue comportant un premier côté longitudinal (51) et un second côté longitudinal (52) en vis-à-vis, le premier côté longitudinal (51) présentant une distance (53) inférieure à l'entrée de lumière (4) que le second côté longitudinal (52),
**caractérisé en ce que**
l'élément optique primaire (3) comprend, au moins dans une partie du côté de l'entrée de lumière (4), une pluralité de canaux de lumière juxtaposés s'étendant dans le sens de la sortie de lumière (5), chacun ayant une section transversale circulaire et se confondant latéralement l'un dans l'autre, les canaux de lumière (8) convergeant au fur et à mesure de leur approche vers la sortie de lumière (5) de telle sorte qu'au moins un canal de lumière (8) est entièrement absorbé par les autres canaux de lumière.

13. Moyen d'éclairage (3) selon la revendication 12,
**caractérisé en ce que**
l'élément optique primaire (3) comporte un corps de base (31) qui définit une cavité (32) et dont la paroi interne (33) est réfléchissante au moins pour une partie spectrale du rayonnement électromagnétique visible.

14. Moyen d'éclairage (3) selon la revendication 12,
**caractérisé en ce que** l'élément optique primaire (3) est conçu sous forme d'un concentrateur diélectrique dont le corps de base (31) est un corps plein constitué par un matériau diélectrique à indice de réfraction approprié, de sorte que la lumière couplée via l'entrée de lumière (4) est réfléchie par réflexion totale sur des interfaces latérales (34) du corps plein avec le milieu environnant qui assurent la communication entre l'entrée de lumière (4) et la sortie de lumière (5).

15. Elément optique primaire (3) selon l'une des revendications 12 à 14,
**caractérisé en ce qu'**au droit de la sortie de lumière, l'élément optique primaire (3) présente une forme asymétrique en section transversale.

16. Elément optique primaire (3) selon l'une des revendications 12 à 15,
**caractérisé en ce que**
le premier côté longitudinal (51) de la sortie de lumière comporte deux tronçons (56, 57) dont les directions principales d'extension sont inclinées l'une par rapport à l'autre pour inclure, sur une face extérieure de la sortie de lumière, un angle (9) inférieur ou égal à 170° et supérieur ou égal à 160°.

17. Elément optique primaire (3) selon l'une des revendications 12 à 16,
**caractérisé en ce que**
l'élément optique primaire (3) est conçu sous forme d'un Compound Parabolic Concentrator (CPC), d'un Compound Elliptic Concentrator (CEC) ou d'un Compound Hyperbolic Concentrator (CHC) .

18. Elément optique primaire (3) selon l'une des revendications 12 à 17,
**caractérisé en ce que**
des surfaces réfléchissantes de l'élément optique primaire sont conçues comme des surfaces à forme aléatoire.

19. Moyen d'éclairage (3) selon la revendication 18,
**caractérisé en ce que** les surfaces à forme aléatoire présentent une forme telle que l'élément primaire optique (3) reproduise la lumière entrant par l'entrée de lumière (4) sur la sortie de lumière (5) ou une surface imaginaire disposée en aval de la sortie de lumière (5) dans une direction d'émission de l'élément optique primaire, avec une distribution de luminance non homogène.

20. Elément optique primaire (3) selon l'une des revendications 12 à 19,
**caractérisé en ce que** l'élément optique primaire (3) présente des surfaces réfléchissantes courbées de manière convexe.

21. Elément optique primaire (3) selon l'une des revendications 12 à 20,
**caractérisé en ce que**
la section transversale de l'élément optique primaire augmente continuellement au fur et à mesure de sa progression depuis l'entrée de lumière (4) vers la sortie de lumière (5) ou
que l'élément optique primaire (3) se compose de tronçons dont la section transversale augmente continuellement au fur et à mesure de sa progression vers la sortie de lumière (5) et de tronçons à section transversale constante.

22. Moyen d'éclairage (6) selon l'une des revendications 1 à 11,
**caractérisé en ce que**
l'élément optique primaire (3) est configuré selon l'une des revendications 12 à 21.
